# EUROPEAN PATENT APPLICATION

(11) **EP 4 395 388 A1**
(43) Date of publication of application: **03.07.2024**
(21) Application number: 22861312.1
(22) Date of filing: 22.08.2022
(51) Int. Cl.: H04W 8/18, H04W 8/08, H04W 24/02, H04W 60/04, H04W 92/10

(54) **DEVICE AND METHOD**

(30) Priority: 27.08.2021 JP 2021138945
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: YAMAMOTO, Tomoyuki, Kariya-city, Aichi 448-8661 (JP); TAKAHASHI, Hideaki, Kariya-city, Aichi 448-8661 (JP)
(74) Representative: TBK
(86) International application number: PCT/JP2022/031562
(87) International publication number: WO 2023/027024

(57) **Abstract**

An apparatus (200) according to an aspect of the present disclosure includes: a communication processing unit (235) configured to receive, from a base station (100), a radio resource control, RRC, message including granularity information for path information indicating at least a moving path of the apparatus; and an information obtaining unit (231) configured to obtain the granularity information included in the RRC message, wherein the granularity information indicates an interval between waypoints on the moving path.

## Description

### CROSS-REFERENCE TO RELATED APPLICATIONS

This application is based on Japanese Patent Application No. 2021-138945, filed on August 27, 2021, the content of which is incorporated herein.

### Technical Field

The present disclosure relates to an apparatus and a method.

### Background Art

In 3rd Generation Partnership Project (3GPP) (registered trademark) Release 15, as a work item for long term evolution (LTE), some features for unmanned aerial vehicles (UAVs) as user equipments (UEs) have been discussed and specified (NPL 1).

One of the specified features is a Flight Path feature. With the Flight Path feature, a flight path of a UAV is reported from the UAV to the network in response to a request from the network. It is assumed that this will serve for control based on a moving plan of the UAV at the network side, such as handover or beamforming (NPL 2).

Although the Flight Path feature has not yet been defined for new radio (NR), utilization of the Flight Path feature is mentioned in proposals of work items for Release 18 (NPLs 3 to 5).

### Citation List

### Non Patent Literature

NPL 1: 3GPP TS 36.331 V15.14.0 (2021-06), "3rd Generation Partnership Project; Technical Specification Group Radio Access Network; Evolved Universal Terrestrial Radio Access (E-UTRA); Radio Resource Control (RRC); protocol specification (Release 15)"
NPL 2: 3GPP TSG-RAN WG2 Meeting #101bis Sanya, China, 16 - 20 Apr 2018, R2-1805125, Huawei, HiSilicon, CMCC, Fraunhofer, Nokia, Nokia Shanghai Bell, Lenovo, Motorola Mobility, InterDigital, KDDI, "Discussion on flight path information"
NPL 3: 3GPP TSG RAN - RAN-Rel-18 workshop, Online, 2021-06-28 - 2021-07-02, RWS-210190, Ericsson, "Motivation for Rel-18 UAV"
NPL 4: 3GPP TSG RAN Rel-18 workshop, Electronic Meeting, June 28 - July 2, 2021, RWS-210254, Lenovo, Motorola Mobility, "Discussion on UAV Swarm Support in NR RAN for Rel-18"
NPL 5: 3GPP TSG RAN Rel-18 workshop, Electronic Meeting, June 28 - July 2, 2021, RWS-210474, ZTE, Sanechips, "Support of UAV for 5G Advanced"

### Summary of the Invention

A detailed study by the inventors has revealed the following issue. That is, granularity of path information is not considered in the framework of Release 15 described in NPLs 1 and 2, and the granularity of path information reported from a UE depends on implementation of the UE. Thus, there is a possibility that granularity of path information reported by a UE might be unsuitable for communication control based on the path information at the network (that is, base station) side.

An object of the present disclosure is to provide an apparatus and a method capable of providing path information suitable for communication control at base stations based on path information.

An apparatus (200) according to an aspect of the present disclosure includes: a communication processing unit (235) configured to receive, from a base station (100), a radio resource control, RRC, message including granularity information for path information indicating at least a moving path of the apparatus; and an information obtaining unit (231) configured to obtain the granularity information included in the RRC message, wherein the granularity information indicates an interval between waypoints on the moving path.

An apparatus (100) according to an aspect of the present disclosure includes: an information obtaining unit (141) configured to obtain granularity information for path information indicating at least a moving path of a user equipment (200); and a communication processing unit (145) configured to transmit a radio resource control, RRC, message including the granularity information to the user equipment, wherein the granularity information indicates an interval between waypoints on the moving path.

A method performed by an apparatus (200) according to an aspect of the present disclosure includes: receiving, from a base station (100), a radio resource control, RRC, message including granularity information for path information indicating at least a moving path of the apparatus; and obtaining the granularity information included in the RRC message, wherein the granularity information indicates an interval between waypoints on the moving path.

A method performed by an apparatus (100) according to an aspect of the present disclosure includes: obtaining granularity information for path information indicating at least a moving path of a user equipment (200); and transmitting a radio resource control, RRC, message including the granularity information to the user equipment, wherein the granularity information indicates an interval between waypoints on the moving path.

According to the present disclosure, it is possible to provide path information suitable for communication control at base stations based on path information. Note that the present disclosure may yield another advantageous effect instead of or in addition to this advantageous effect.

### Brief Description of Drawings

FIG. 1 is an explanatory diagram illustrating an example of a schematic configuration of a system according to embodiments of the present disclosure.
FIG. 2 is an explanatory diagram for explaining an example of communication control based on a moving path of a user equipment according to embodiments of the present disclosure.
FIG. 3 is a block diagram illustrating an example of a schematic functional configuration of a base station according to embodiments of the present disclosure.
FIG. 4 is a block diagram illustrating an example of a schematic hardware configuration of the base station according to embodiments of the present disclosure.
FIG. 5 is a block diagram illustrating an example of a schematic functional configuration of the user equipment according to embodiments of the present disclosure.
FIG. 6 is a block diagram illustrating an example of a schematic hardware configuration of the user equipment according to embodiments of the present disclosure.
FIG. 7 is a diagram for explaining an example of path information according to embodiments of the present disclosure.
FIG. 8 is a diagram for explaining an example of an interval between waypoints on a moving path according to embodiments of the present disclosure.
FIG. 9 is a sequence diagram for explaining an example of a schematic flow of processing according to embodiments of the present disclosure.
FIG. 10 is a diagram for explaining an example of an interval between waypoints on a moving path according to a first modification example of embodiments of the present disclosure.
FIG. 11 is a sequence diagram for explaining an example of a schematic flow of processing according to a second modification example of embodiments of the present disclosure.
FIG. 12 is a sequence diagram for explaining another example of a schematic flow of processing according to the second modification example of embodiments of the present disclosure. Description of Embodiments

Hereinafter, embodiments of the present disclosure will be described in detail with reference to the appended drawings. In the present specification and the drawings, elements to which similar descriptions are applicable are denoted with the same reference signs, thereby omitting duplicate descriptions.

Descriptions will be given in the following order:
1. Configuration of System
2. Configuration of Base Station
3. Configuration of User Equipment
4. Operation Examples
5. Modification Examples

### <1. Configuration of System>

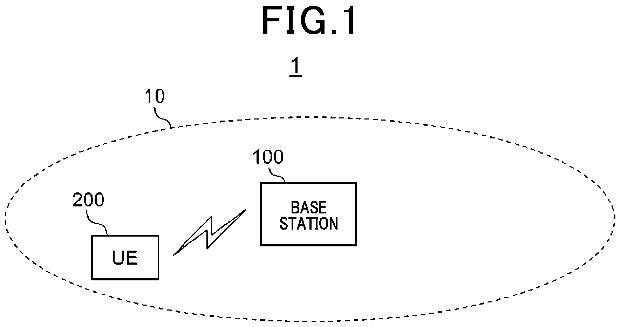

An example of a configuration of a system 1 according to embodiments of the present disclosure will be described with reference to FIG. 1. Referring to FIG. 1, the system 1 includes a base station 100 and a user equipment (UE) 200.

For example, the system 1 is a system compliant with technical specifications (TSs) in 3GPP. More specifically, for example, the system 1 is a system compliant with the TSs of 5G or new radio (NR). Naturally, the system 1 is not limited to this example. For example, the system 1 may be a system compliant with the TSs of LTE, LTE advanced (LTE-A), or 4G.

### (1) Base Station 100

The base station 100 is a node in a radio access network (RAN) and communicates with a UE (for example, UE 200) located within a coverage area 10 of the base station 100.

For example, the base station 100 communicates with a UE (for example, UE 200) using a RAN protocol stack. For example, the protocol stack includes protocols of radio resource control (RRC), service data adaptation protocol (SDAP), packet data convergence protocol (PDCP), radio link control (RLC), medium access control (MAC), and physical (PHY) layers. Alternatively, the protocol stack does not have to include all of these protocols, but may include some of these protocols.

For example, the base station 100 is a gNB. The gNB is a node that provides NR user plane and control plane protocol terminations towards a UE and is connected to the 5G core network (5GC) via an NG interface. Alternatively, the base station 100 may be an en-gNB. The en-gNB is a node that provides NR user plane and control plane protocol terminations towards a UE and operates as a secondary node in E-UTRA-NR dual connectivity (EN-DC).

The base station 100 may include a plurality of nodes. The plurality of nodes may include a first node that hosts higher layers included in the protocol stack and a second node that hosts lower layers included in the protocol stack. The higher layers may include the RRC, SDAP, and PDCP, while the lower layers may include the RLC, MAC, and PHY layers. The first node may be a central unit (CU) and the second node may be a distributed unit (DU). Note that the plurality of nodes may include a third node that performs lower level processing of the PHY layer and the second node may perform higher level processing of the PHY layer. The third node may be a radio unit (RU).

Alternatively, the base station 100 may be one of the plurality of nodes and may be connected to another unit of the plurality of nodes.

The base station 100 may be an integrated access and backhaul (IAB) donor or an IAB node.

### (2) UE 200

The UE 200 communicates with a base station. For example, the UE 200 communicates with the base station 100 in a case where the UE 200 is located within the coverage area 10 of the base station 100.

For example, the UE 200 communicates with a base station (for example, base station 100) using the protocol stack.

In particular, the UE 200 is mounted on a moving body. For example, the moving body may be an aircraft such as a UAV or a vehicle such as an autonomous driving car or a manual driving car with a navigation function. In the moving body, a moving path may be set in advance. The UE 200 can benefit from communication control based on the moving path by reporting the moving path to the network (that is, base station 100). Reporting of the moving path may be supported by, for example, a Flight Path mechanism or another moving path reporting mechanism.

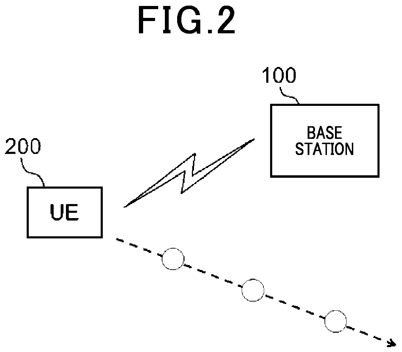

Referring to the example of FIG. 2, for example, the UE 200 reports the set moving path to the base station 100. The base station 100 preliminarily performs, for example, processing for handover or beamforming based on a future position of the UE 200 that is estimated from the reported moving path. This allows for performing communication control suitable for the estimated position at a timing when the UE 200 reaches the position.

### <2. Configuration of Base Station>

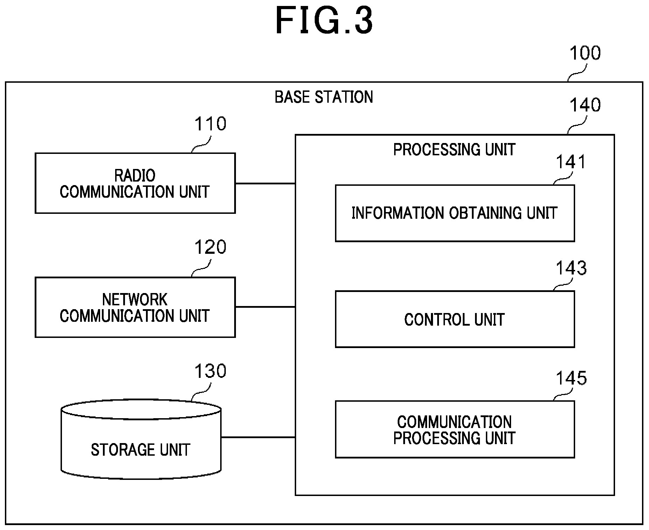

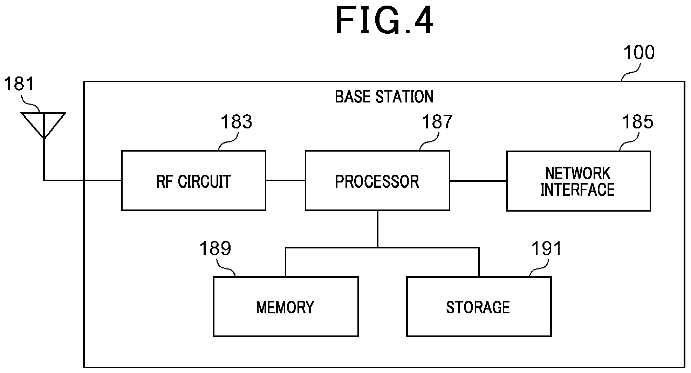

An example of a configuration of the base station 100 according to embodiments of the present disclosure will be described with reference to FIGS. 3 and 4.

### (1) Functional Configuration

First, an example of a functional configuration of the base station 100 according to embodiments of the present disclosure will be described with reference to FIG. 3. Referring to FIG. 3, the base station 100 includes a radio communication unit 110, a network communication unit 120, a storage unit 130, and a processing unit 140.

The radio communication unit 110 wirelessly transmits and receives signals. For example, the radio communication unit 110 receives signals from and transmits signals to a UE.

The network communication unit 120 receives signals from and transmits signals to the network.

The storage unit 130 stores various kinds of information for the base station 100.

The processing unit 140 provides various functions of the base station 100. The processing unit 140 includes an information obtaining unit 141, a control unit 143, and a communication processing unit 145. Note that the processing unit 140 may further include another component in addition to these components. That is, the processing unit 140 may also perform an operation other than operations of these components. Specific operations of the information obtaining unit 141, the control unit 143, and the communication processing unit 145 will be described in detail later.

For example, the processing unit 140 (communication processing unit 145) communicates with a UE (for example, UE 200) via the radio communication unit 110. For example, the processing unit 140 (communication processing unit 145) communicates with other nodes (for example, network nodes within the core network or other base stations) via the network communication unit 120.

### (2) Hardware Configuration

Next, an example of a hardware configuration of the base station 100 according to embodiments of the present disclosure will be described with reference to FIG. 4. Referring to FIG. 4, the base station 100 includes an antenna 181, a radio frequency (RF) circuit 183, a network interface 185, a processor 187, a memory 189, and a storage 191.

The antenna 181 converts signals into radio waves and emits the radio waves into the air. In addition, the antenna 181 receives radio waves in the air and converts the radio waves into signals. The antenna 181 may include a transmitting antenna and a receiving antenna or may be a single antenna for transmission and reception. The antenna 181 may be a directional antenna and may include a plurality of antenna elements.

The RF circuit 183 performs analog processing on signals that are transmitted and received via the antenna 181. The RF circuit 183 may include a high-frequency filter, an amplifier, a modulator, a lowpass filter, and the like.

The network interface 185 is, for example, a network adaptor, and transmits signals to and receives signals from the network.

The processor 187 performs digital processing on signals that are transmitted and received via the antenna 181 and the RF circuit 183. The digital processing includes processing of the RAN protocol stack. The processor 187 also performs processing on signals that are transmitted and received via the network interface 185. The processor 187 may include a plurality of processors or may be a single processor. The plurality of processors may include a baseband processor that performs the digital processing and one or more processors that perform other processing.

The memory 189 stores a program to be executed by the processor 187, a parameter related to the program, and other various kinds of information. The memory 189 may include at least one of a read only memory (ROM), an erasable programmable read only memory (EPROM), an electrically erasable programmable read only memory (EEPROM), a random access memory (RAM), and a flash memory. All or part of the memory 189 may be included in the processor 187.

The storage 191 stores various kinds of information. The storage 191 may include at least one of a solid state drive (SSD) and a hard disc drive (HDD).

The radio communication unit 110 may be implemented by the antenna 181 and the RF circuit 183. The network communication unit 120 may be implemented by the network interface 185. The storage unit 130 may be implemented by the storage 191. The processing unit 140 may be implemented by the processor 187 and the memory 189.

Part or all of the processing unit 140 may be virtualized. In other words, part or all of the processing unit 140 may be implemented as a virtual machine. In this case, part or all of the processing unit 140 may operate as a virtual machine on a physical machine including a processor, a memory, and the like (that is, hardware) and a hypervisor.

Given the hardware configuration described above, the base station 100 may include a memory (that is, memory 189) that stores a program and one or more processors (that is, processor 187) capable of executing the program, and the one or more processors may perform operations of the processing unit 140 by executing the program. The program may be a program for causing the processors to execute the operations of the processing unit 140.

### <3. Configuration of User Equipment>

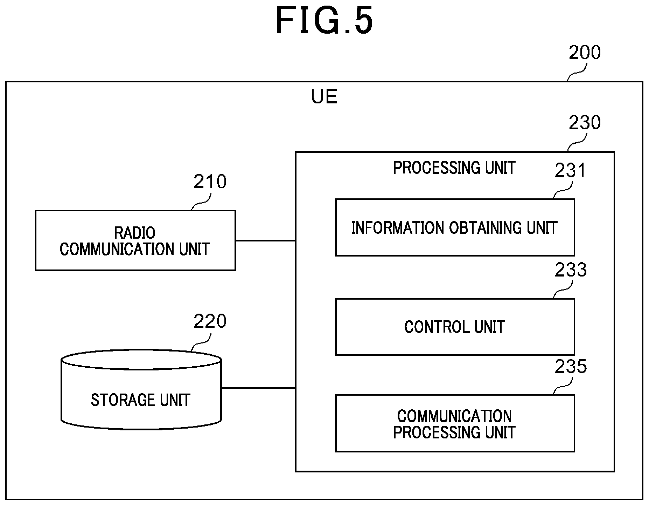

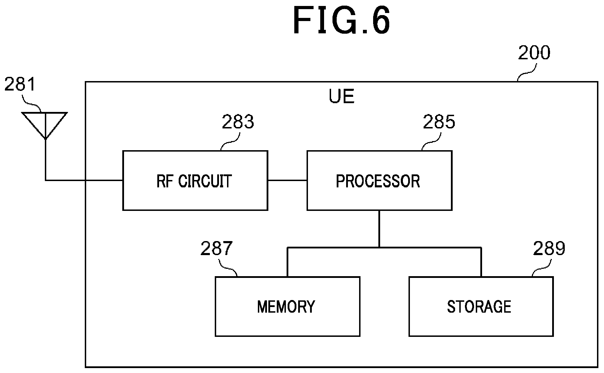

An example of a configuration of the UE 200 according to embodiments of the present disclosure will be described with reference to FIGS. 5 and 6.

### (1) Functional Configuration

First, an example of a functional configuration of the UE 200 according to embodiments of the present disclosure will be described with reference to FIG. 5. Referring to FIG. 5, the UE 200 includes a radio communication unit 210, a storage unit 220, and a processing unit 230.

The radio communication unit 210 wirelessly transmits and receives signals. For example, the radio communication unit 210 receives signals from and transmits signals to a base station. For example, the radio communication unit 210 receives signals from and transmits signals to another UE.

The storage unit 220 stores various kinds of information for the UE 200.

The processing unit 230 provides various functions of the UE 200. The processing unit 230 includes an information obtaining unit 231, a control unit 233, and a communication processing unit 235. Note that the processing unit 230 may further include another component in addition to these components. That is, the processing unit 230 may also perform an operation other than operations of these components. Specific operations of the information obtaining unit 231, the control unit 233, and the communication processing unit 235 will be described in detail later.

For example, the processing unit 230 (communication processing unit 235) communicates with a base station (for example, base station 100) or another UE via the radio communication unit 210.

### (2) Hardware Configuration

Next, an example of a hardware configuration of the UE 200 according to embodiments of the present disclosure will be described with reference to FIG. 6. Referring to FIG. 6, the UE 200 includes an antenna 281, an RF circuit 283, a processor 285, a memory 287, and a storage 289.

The antenna 281 converts signals into radio waves and emits the radio waves into the air. In addition, the antenna 281 receives radio waves in the air and converts the radio waves into signals. The antenna 281 may include a transmitting antenna and a receiving antenna or may be a single antenna for transmission and reception. The antenna 281 may be a directional antenna and may include a plurality of antenna elements.

The RF circuit 283 performs analog processing on signals that are transmitted and received via the antenna 281. The RF circuit 283 may include a high-frequency filter, an amplifier, a modulator, a lowpass filter, and the like.

The processor 285 performs digital processing on signals that are transmitted and received via the antenna 281 and the RF circuit 283. The digital processing includes processing of the RAN protocol stack. The processor 285 may include a plurality of processors or may be a single processor. The plurality of processors may include a baseband processor that performs the digital processing and one or more processors that perform other processing.

The memory 287 stores a program to be executed by the processor 285, a parameter related to the program, and other various kinds of information. The memory 287 may include at least one of a ROM, an EPROM, an EEPROM, a RAM, and a flash memory. All or part of the memory 287 may be included in the processor 285.

The storage 289 stores various kinds of information. The storage 289 may include at least one of an SSD and an HDD.

The radio communication unit 210 may be implemented by the antenna 281 and the RF circuit 283. The storage unit 220 may be implemented by the storage 289. The processing unit 230 may be implemented by the processor 285 and the memory 287.

The processing unit 230 may be implemented by a system on chip (SoC) including the processor 285 and the memory 287. The SoC may include the RF circuit 283, and the radio communication unit 210 may also be implemented by this SoC.

Given the hardware configuration described above, the UE 200 may include a memory (that is, memory 287) that stores a program and one or more processors (that is, processor 285) capable of executing the program, and the one or more processors may perform operations of the processing unit 230 by executing the program. The program may be a program for causing the processors to execute the operations of the processing unit 230.

### <4. Operation Examples>

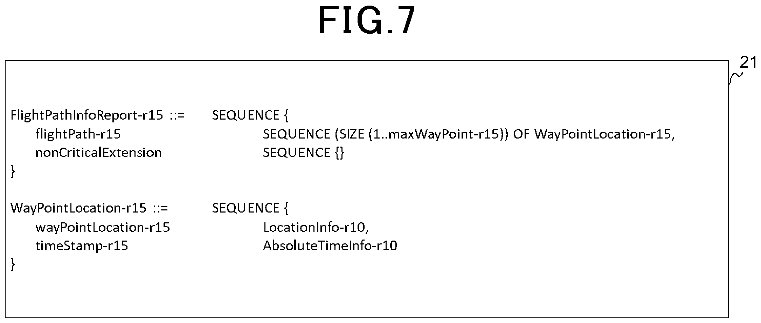

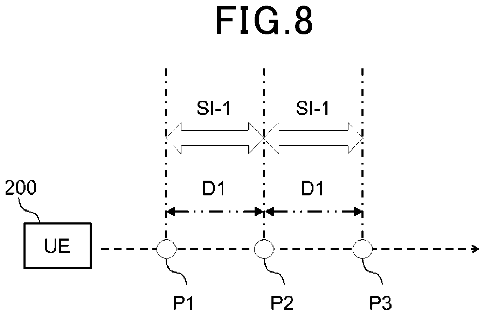

Examples of operations of the base station 100 and the UE 200 according to embodiments of the present disclosure will be described with reference to FIGS. 7 and 8.

### (1) Operation of Base Station 100

The base station 100 transmits granularity information for path information and requests path information from the UE 200. Then, the base station 100 receives the path information from the UE 200. The following describes operations of the base station 100 and relevant information in detail.

### (1-1) Request for Path Information with Granularity Specification

The base station 100 requests path information from the UE 200 with granularity information. Specifically, the base station 100 (information obtaining unit 141) obtains granularity information for path information indicating at least a moving path of the UE 200. The base station 100 (communication processing unit 145) transmits an RRC message including the granularity information to the UE 200. The RRC message includes path request information that requests transmission of path information.

For example, the base station 100 receives an RRC message A including information indicating availability of path information from the UE 200. The base station 100 transmits an RRC message B including the granularity information and the path request information to the UE 200. Note that the granularity information may be optional. For example, once the granularity information is transmitted, the granularity information may not be transmitted until it is changed.

For example, the RRC message A is an RRC SetupComp, ReestablishmentComp, ResumeComp, ReconfigurationComp, or the like. Further, the RRC message B is a UEInformationRequest. For example, the information indicating availability of path information is flightPathInfoAvailable or equivalent information, and the path request information is flightPathInfoReq or equivalent information.

The path information will be described with reference to FIG. 7. The path information includes waypoint-related information regarding a waypoint on the moving path. The waypoint-related information includes at least waypoint information indicating a waypoint on the moving path and time information indicating time regarding the waypoint. For example, as illustrated in information 21 in FIG. 7, the path information may be FlightPathInfoReport or equivalent information, and the waypoint-related information may be WayPointLocation or equivalent information. Further, the waypoint information may be wayPointLocation or equivalent information, and the time information may be timeStamp or equivalent information.

The granularity information will be described with reference to FIG. 8. The granularity information indicates an interval between waypoints on the moving path of the UE 200. Specifically, the interval between waypoints on the moving path is a spatial interval between waypoints on the moving path. For example, the granularity information may indicate a value of the distance between waypoints on the moving path.

Referring to FIG. 8, the moving path is indicated by a dashed arrow and the UE 200 passes waypoints P1 to P3. The granularity information is a value indicating distance D1 in a specific unit between two adjacent waypoints. The unit may be m, km, or the like. For example, in a case where path information in 100-m increments is requested, the granularity information is information indicating 100 m. In this way, in a case where the granularity information indicates a spatial interval, granularity of the path information received from the UE 200 can be matched to granularity of position information of the UE 200 that is estimated in communication control based on the path information.

Further, the granularity information may indicate a range of the distance between waypoints on the moving path. Specifically, the granularity information may indicate a settable maximum value, minimum value, or range of the spatial interval (that is, distance) between waypoints on the moving path. For example, the granularity information may be a value indicating a range of settable distance, such as maximum 100 m, minimum 100 m, or 50 m to 100 m. For example, the distance D1 indicated in FIG. 8 is a value that is at most the maximum value, at least the minimum value, or within the range of the settable distance. In this case, providing a range of the granularity information allows the UE 200 to more flexibly set the path information. Therefore, it is possible to obtain, from the UE 200, path information with the granularity that is suitable for communication control based on the path information at the base station 100 and can be set by the UE 200.

Further, the granularity information may be a predefined setting value corresponding to the interval between waypoints on the moving path. For example, the granularity information may be a setting value SI-1 corresponding to the distance D1 as illustrated in FIG. 8. Note that the setting value may be a value indicating a range of the interval as described above. In this case, transmitting a setting value instead of a specific numerical value can compress the granularity information. Therefore, it is possible to make signaling related to transmission of the granularity information more efficient.

### (1-2) Reception of Path Information

The base station 100 receives the path information from the UE 200. Specifically, the base station 100 (communication processing unit 145) receives an RRC message including the path information from the UE 200. The base station 100 (information obtaining unit 141) obtains the path information included in the received RRC message.

For example, the RRC message including the path information is a UEInformationResponse. The path information is flightPathInfoReport or equivalent information. The path information is set based on the granularity information transmitted along with the path request information.

### (2) Operation of UE 200

The UE 200 receives the granularity information for path information from the base station 100. The UE 200 sets the path information based on the received granularity information. Then, the UE 200 transmits the set path information to the base station 100. The following describes operations of the UE 200 and relevant information in detail. Note that detailed descriptions of contents that are substantially the same as the descriptions of the operations of the base station 100 will be omitted.

### (2-1) Setting of Path Information Based on Specified Granularity

The UE 200 sets the path information based on the granularity information for path information. Specifically, the UE 200 (communication processing unit 235) receives an RRC message including the granularity information from the base station 100. The UE 200 (control unit 233) sets the path information based on the received granularity information. The RRC message includes the path request information.

For example, the UE 200 transmits the above-mentioned RRC message A including the information indicating availability of path information to the base station 100. Then, the UE 200 receives, from the base station 100, the above-mentioned RRC message B including the granularity information and the path request information. The UE 200 sets the path information based on the received granularity information.

### (2-2) Transmission of Path Information

The UE 200 transmits the path information to the base station 100. Specifically, the UE 200 (information obtaining unit 231) obtains the path information set based on the granularity information. The UE 200 (communication processing unit 235) transmits an RRC message including the obtained path information to the base station 100.

For example, upon receiving the above-mentioned RRC message B including the path request information and the granularity information from the base station 100, the UE 200 transmits an RRC message C including the path information set based on the granularity information to the base station 100. The RRC message C is a UEInformationResponse.

### (3) Flow of Processing

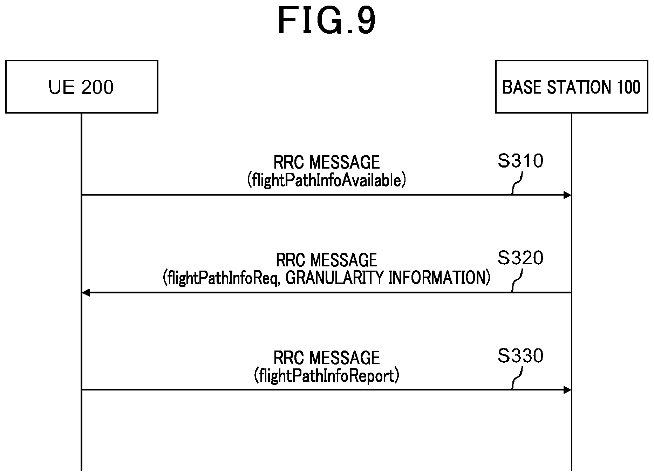

An example of processing according to embodiments of the present disclosure will be described with reference to FIG. 9.

The UE 200 transmits an RRC message including the information indicating availability of path information to the base station 100 (S310). For example, the UE 200 transmits the above-mentioned RRC message A including the flightPathInfoAvailable.

The base station 100 transmits an RRC message including the path request information and the granularity information to the UE 200 (S320). For example, upon receiving the flightPathInfoAvailable, the base station 100 transmits the above-mentioned RRC message B including the flightPathInfoReq and the granularity information.

The UE 200 transmits an RRC message including the path information to the base station 100 (S330). For example, upon receiving the flightPathInfoReq and the granularity information, the UE 200 sets the flightPathInfoReport based on the granularity information. The UE 200 transmits the above-mentioned RRC message C including the set flightPathInfoReport.

In this way, according to embodiments of the present disclosure, an RRC message including the granularity information for path information of the UE 200 is transmitted from the base station 100 to the UE 200, and the granularity information indicates an interval between waypoints on the moving path of the UE 200.

In the framework of Release 15, since granularity of the path information reported from a UE depends on implementation of the UE, there is a possibility that the granularity of the path information reported by the UE might be unsuitable for communication control based on the path information at a base station. For example, in a case where the granularity of the path information is coarse, errors may occur in timing or contents of the communication control based on the path information, and accuracy or precision of the communication control may deteriorate. Further, in a case where the granularity of the path information is fine, information that does not contribute much to the communication control based on the path information may increase, and signaling efficiency may deteriorate.

In contrast, according to embodiments of the present disclosure, the UE 200 is notified of the granularity information for path information, so that it can provide path information suitable for communication control based on the path information at the base station 100. As a result, it is possible to carry out appropriate communication control at an appropriate timing.

### <5. Modification Examples>

First to fourth modification examples according to embodiments of the present disclosure will be described. Note that two or more of these modification examples may be combined.

### (1) First Modification Example: Granularity of Time Interval

In the above-mentioned embodiment of the present disclosure, the granularity information indicates a spatial interval between waypoints on the moving path. However, the granularity information according to embodiments of the present disclosure is not limited to this example.

As a first modification example of embodiments of the present disclosure, the granularity information may indicate a time interval between waypoints on the moving path. For example, the granularity information may indicate a value of arrival time difference between waypoints on the moving path.

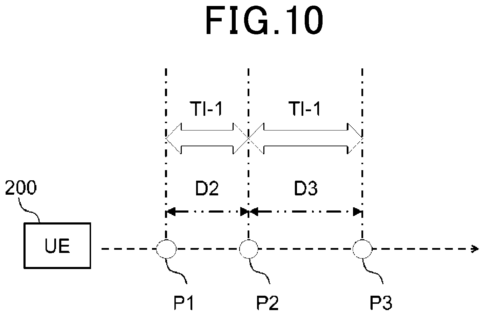

Referring to FIG. 10, the moving path is indicated by a dashed arrow and the UE 200 passes waypoints P1 to P3. The granularity information is a value indicating arrival time difference between two adjacent waypoints in a specific unit. The unit may be hour, minute, second, or the like. For example, in a case where path information in 1-minute increments is requested, the granularity information is information indicating 1 minute. In this case, the difference between arrival time at the waypoint P1 and arrival time at the waypoint P2 in FIG. 10 is 1 minute. Note that, if a moving speed of the UE 200 is not constant, the distance between waypoints will not be constant. For example, while the time interval between the waypoint P1 and the waypoint P2 and the time interval between the waypoint P2 and the waypoint P3 in FIG. 10 are the same, distance D2 between the waypoint P1 and the waypoint P2 and distance D3 between the waypoint P2 and the waypoint P3 may be different.

Further, the granularity information may indicate a range of the time interval between waypoints on the moving path. Specifically, the granularity information may indicate a settable maximum value, minimum value, or range of the time interval (that is, arrival time difference) between waypoints on the moving path. For example, the granularity information may be a value indicating a settable range of arrival time difference, such as maximum 10 minutes, minimum 1 minute, or 1 minute to 10 minutes.

Further, the granularity information may be a predefined setting value corresponding to the interval between waypoints on the moving path. For example, the granularity information may be a setting value TI-1 corresponding to the specific time interval (for example, 1 minute) as illustrated in FIG. 10.

In this way, according to the first modification example of embodiments of the present disclosure, the interval between waypoints on the moving path indicated by the path information is a time interval between waypoints on the moving path. This allows the granularity of the path information received from the UE 200 to be matched to granularity of timings of communication control based on the path information.

### (2) Second Modification Example: Granularity Setting Based on Moving Speed Information

In the above-mentioned embodiment of the present disclosure, the granularity information is obtained by the base station 100. However, the granularity information according to embodiments of the present disclosure is not limited to this example.

As a second modification example of embodiments of the present disclosure, the granularity information may be set based on moving-speed-related information regarding a moving speed of the UE 200.

Specifically, the base station 100 (communication processing unit 145) receives an RRC message including the moving-speed-related information from the UE 200. The base station 100 (control unit 143) configures the granularity information based on the moving-speed-related information.

Further, the UE 200 (communication processing unit 235) transmits an RRC message including the moving-speed-related information to the base station 100. The RRC message including the moving-speed-related information is transmitted before an RRC message including the granularity information is received.

More specifically, the RRC message including the moving-speed-related information includes the information indicating availability of path information. For example, the RRC message including the moving-speed-related information may be the above-mentioned RRC message A. In this way, making use of communication in an existing mechanism of Flight Path defined in the TSs allows for providing the moving-speed-related information without any additional RRC messages.

The moving-speed-related information is information indicating a moving speed of the UE 200. For example, the information indicating a moving speed indicates a maximum moving speed or an average moving speed. Note that the moving-speed-related information may be information indicating a moving velocity of the UE 200.

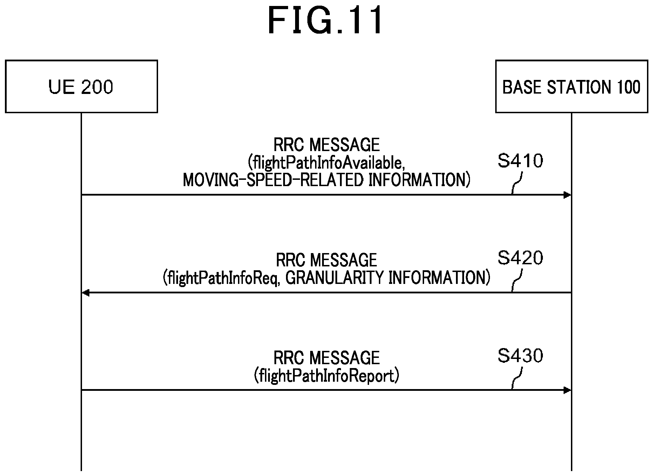

Further, an example of processing of this modification example will be described in detail with reference to FIG. 11.

The UE 200 transmits an RRC message including the information indicating availability of path information and the moving-speed-related information to the base station 100 (S410). For example, the UE 200 transmits the above-mentioned RRC message A including the flightPathInfoAvailable and the information indicating a moving speed. Note that the moving-speed-related information may be included in an RRC message only when the information indicating availability of path information is included in that RRC message.

The base station 100 transmits an RRC message including the path request information and the granularity information to the UE 200 (S420). For example, upon receiving the flightPathInfoAvailable and the information indicating a moving speed, the base station 100 configures the granularity information based on the information indicating a moving speed. Then, the base station 100 transmits the above-mentioned RRC message B including the flightPathInfoReq and the configured granularity information.

The UE 200 transmits an RRC message including the path information to the base station 100 (S430). For example, upon receiving the flightPathInfoReq and the granularity information, the UE 200 sets the flightPathInfoReport based on the granularity information. Then, the UE 200 transmits the above-mentioned RRC message C including the set flightPathInfoReport.

Note that the moving-speed-related information may be existing information that has been defined in the TSs. Specifically, the moving-speed-related information is information for estimating a moving speed.

More specifically, the moving-speed-related information may be information transmitted in an RRC connection establishment procedure. For example, the moving-speed-related information may be mobilityState. The mobilityState is included in RRC SetupComp, ReestablishmentComp, and ResumeComp that are messages transmitted in the RRC connection establishment procedure. For example, a message transmitted in the RRC connection establishment procedure may be the RRC message transmitted in S410 in FIG. 11. In this way, making use of the information already defined in the TSs allows for preventing an increase in information in signaling while achieving provision of the moving-speed-related information. That is, an increase in consumption of radio resources can be prevented.

Further, the moving-speed-related information may be information transmitted in response to a request for the moving-speed-related information. Specifically, an RRC message including moving speed request information that requests transmission of the moving-speed-related information is transmitted from the base station 100 to the UE 200. The RRC message including the moving-speed-related information is transmitted as a response to the RRC message including the moving speed request information. For example, the moving-speed-related information may be mobilityHistoryReport. In this way, making use of an existing mechanism of information provision between a base station and a UE defined in the TSs allows for providing the moving-speed-related information without additionally defining a new signaling mechanism.

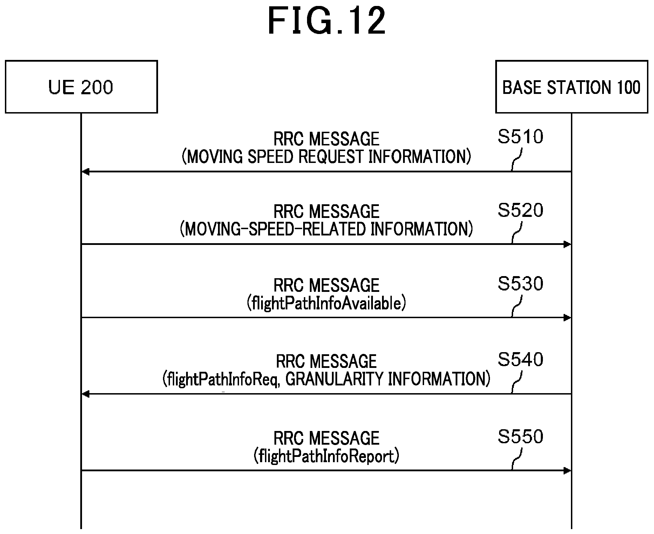

The moving-speed-related information transmitted in response to a request will be described in detail with reference to FIG. 12. Note that descriptions of processing that is substantially the same as the processing in FIG. 11 will be omitted.

The base station 100 transmits, to the UE 200, an RRC message including the moving speed request information that requests transmission of the moving-speed-related information (S510). For example, the base station 100 transmits a UEInformationRequest message including mobilityHistoryReportReq that indicates a value 'true' as the moving speed request information.

The UE 200 transmits an RRC message including the moving-speed-related information to the base station 100 (S520). For example, the UE 200 transmits a UEInformationResponse message including the mobilityHistoryReport when the value of the received mobilityHistoryReportReq is 'true'.

The base station 100 estimates a moving speed of the UE 200 based on the received moving-speed-related information. For example, the base station 100 estimates a moving speed of the UE 200 based on which cell(s) the UE 200 has camped on and duration(s) for which the UE 200 has camped on the respective cell(s), which are indicated by the received mobilityHistoryReport. Note that, at this point, the granularity information may be configured based on the estimated moving speed.

The UE 200 transmits an RRC message including the information indicating availability of path information to the base station 100 (S530).

The base station 100 transmits an RRC message including the path request information and the granularity information to the UE 200 (S540). For example, upon receiving the flightPathInfoAvailable, the base station 100 configures the granularity information based on the estimated moving speed. Then, the base station 100 transmits the above-mentioned RRC message B including the configured granularity information and the flightPathInfoReq.

The UE 200 transmits an RRC message including the path information to the base station 100 (S550).

In this way, according to the second modification example of embodiments of the present disclosure, an RRC message including the moving-speed-related information is transmitted from the UE 200 to the base station 100 before an RRC message including the granularity information is transmitted from the base station 100 to the UE 200, and the granularity information is configured based on the moving-speed-related information.

Here, the granularity of path information suitable for communication control based on the path information changes depending on the moving speed of the UE 200. For example, in a case where the UE 200 moves at high speed, the finer the granularity (that is, the shorter the interval between waypoints), the more waypoints on the path will be passed through per unit time. In other words, many waypoints will be passed through in a short time. Thus, waypoint information available for the communication control may be reduced, and signaling efficiency for the communication control may deteriorate. Conversely, in a case where the UE 200 moves at low speed, the coarser the granularity (that is, the larger the interval between waypoints), the greater an error in estimated positions of the UE 200 will be. Thus, accuracy or precision of the communication control may deteriorate.

Meanwhile, according to this modification example, the granularity information is configured in light of a moving speed of the UE 200. This allows for providing the path information more suitable for communication control based on the path information.

### (3) Third Modification Example: Transmission Timing of Granularity Information

In the above-mentioned embodiment of the present disclosure, the granularity information is transmitted along with the path request information. However, transmission timing of the granularity information according to embodiments of the present disclosure is not limited to this example.

As a third modification example of embodiments of the present disclosure, the granularity information may be transmitted separately from the path request information.

Specifically, the granularity information may be transmitted before the path request information is transmitted. More specifically, the granularity information may be included in an RRC message D on which the above-mentioned RRC message A including the information indicating availability of path information is based. That is, the RRC message A is transmitted as a response to the RRC message D.

For example, the RRC message D may be an RRC Setup, Reestablishment, Resume, Reconfiguration, or the like. Note that, upon receiving the granularity information, the UE 200 may set the path information based on the granularity information.

In this way, according to the third modification example of embodiments of the present disclosure, the granularity information is transmitted separately from the path request information. For example, the granularity information is transmitted before the path request information is transmitted. This allows for transmitting the granularity information to the UE 200 at an arbitrary timing before the path information is set.

Note that, for example, in a case where an existing mechanism of Flight Path is not used, there is a possibility that the path information is transmitted without transmission and reception of the information indicating availability of path information and the path request information. However, by transmitting the granularity information using an RRC message transmitted from the base station 100 when establishing an RRC connection, such as the above-mentioned RRC message D, the granularity information can be provided to the UE 200 before an RRC message including the path information is transmitted.

### (4) Fourth Modification Example: Compliance with Other TSs

In the above-mentioned examples of embodiments of the present disclosure, the system 1 is a system compliant with the TSs of 5G or NR. However, the system 1 according to embodiments of the present disclosure is not limited to these examples.

In a fourth modification example of embodiments of the present disclosure, the system 1 may be a system compliant with other TSs in 3GPP. As an example, the system 1 may be a system compliant with the TSs of LTE, LTE-A, or 4G and the base station 100 may be an evolved node B (eNB). Alternatively, the base station 100 may be an ng-eNB. As another example, the system 1 may be a system compliant with the TSs of 3G and the base station 100 may be a Node B. As yet another example, the system 1 may be a system compliant with TSs of next generation (for example, 6G).

Alternatively, the system 1 may be a system compliant with TSs of another standardization organization for mobile communications.

While embodiments of the present disclosure have been described above, the present disclosure is not limited to the embodiments. It will be understood by those skilled in the art that the embodiments are merely examples and various changes can be made without departing from the scope and the spirit of the present disclosure.

For example, steps in a process described in the present specification do not necessarily have to be executed chronologically in the order described in the flowchart or sequence diagram. For example, steps in a process may be executed in an order different from the order described as the flowchart or sequence diagram or may be executed in parallel. In addition, some of steps in a process may be removed or a further step may be added to the process.

For example, there may be provided a method including the operations of one or more components of the apparatus described in the present specification, or there may be provided a program for causing a computer to execute the operations of the components. Moreover, there may be provided a non-transitory tangible computer-readable storage medium having stored therein the program. Naturally, such a method, program, and non-transitory tangible computer-readable storage medium are also included in the present disclosure.

For example, in the present disclosure, a user equipment (UE) may be referred to by another name such as mobile station, mobile terminal, mobile apparatus, mobile unit, subscriber station, subscriber terminal, subscriber apparatus, subscriber unit, wireless station, wireless terminal, wireless apparatus, wireless unit, remote station, remote terminal, remote apparatus, or remote unit.

For example, in the present disclosure, "transmit" may mean to perform processing of at least one layer in a protocol stack used for transmission or to physically transmit signals wirelessly or by wire. Alternatively, "transmit" may mean a combination of performing the processing of at least one layer and physically transmitting signals wirelessly or by wire. Similarly, "receive" may mean to perform processing of at least one layer in a protocol stack used for reception or to physically receive signals wirelessly or by wire. Alternatively, "receive" may mean a combination of performing the processing of at least one layer and physically receiving signals wirelessly or by wire. The at least one layer may be replaced with at least one protocol.

For example, in the present disclosure, "obtain/acquire" may mean to obtain/acquire information from stored information, to obtain/acquire information from information received from another node, or to obtain/acquire information by generating the information.

For example, in the present disclosure, "include" and "comprise" do not mean that listed items alone are included, but mean that listed items alone may be included or a further item may be included in addition to the listed items.

For example, in the present disclosure, "or" does not mean exclusive OR but means inclusive OR.

Note that the technical features included in the above-mentioned embodiments may be represented as the following features. Naturally, the present disclosure is not limited to the following features.

### (Feature 1)

A user equipment (200) comprising:
a communication processing unit (235) configured to receive, from a base station (100), a radio resource control, RRC, message including granularity information for path information indicating at least a moving path of the user equipment; and
an information obtaining unit (231) configured to obtain the granularity information included in the RRC message,
wherein
the granularity information indicates an interval between waypoints on the moving path.

### (Feature 2)

The user equipment according to Feature 1,
wherein the interval between waypoints on the moving path is a spatial interval between waypoints on the moving path.

### (Feature 3)

The user equipment according to Feature 1,
wherein the interval between waypoints on the moving path is a time interval between waypoints on the moving path.

### (Feature 4)

The user equipment according to any one of Features 1 to 3,
wherein the granularity information is a predefined setting value corresponding to the interval between waypoints on the moving path.

### (Feature 5)

The user equipment according to any one of Features 1 to 4,
wherein the granularity information indicates a range of the granularity.

### (Feature 6)

The user equipment according to any one of Features 1 to 5,
wherein the RRC message includes path request information that requests transmission of the path information.

### (Feature 7)

The user equipment according to any one of Features 1 to 6,
wherein the communication processing unit is configured to transmit, to the base station, a second RRC message including moving-speed-related information regarding a moving speed of the user equipment, and
wherein the second RRC message is transmitted before a first message that is the RRC message is received.

### (Feature 8)

The user equipment according to Feature 7,
wherein the second RRC message includes information indicating availability of the path information.

### (Feature 9)

The user equipment according to Feature 7 or 8,
wherein the second RRC message is a message transmitted in an RRC connection establishment procedure.

### (Feature 10)

The user equipment according to Feature 7,
wherein the communication processing unit is configured to receive, from the base station, a third RRC message including moving speed request information that requests transmission of the moving-speed-related information, and
wherein the second RRC message is transmitted as a response to the third RRC message.

### (Feature 11)

A base station (100) comprising:
an information obtaining unit (141) configured to obtain granularity information for path information indicating at least a moving path of a user equipment (200); and
a communication processing unit (145) configured to transmit a radio resource control, RRC, message including the granularity information to the user equipment,
wherein
the granularity information indicates an interval between waypoints on the moving path.

### (Feature 12)

The base station according to Feature 11,
wherein the communication processing unit is configured to receive, from the user equipment, a second RRC message including moving-speed-related information regarding a moving speed of the user equipment, and
the base station further comprises a control unit (143) configured to configure the granularity information based on the moving-speed-related information.

### (Feature 13)

A method performed by a user equipment (200), comprising:
receiving, from a base station (100), a radio resource control, RRC, message including granularity information for path information indicating at least a moving path of the user equipment; and
obtaining the granularity information included in the RRC message,
wherein
the granularity information indicates an interval between waypoints on the moving path.

### (Feature 14)

A method performed by a base station (100), comprising:
obtaining granularity information for path information indicating at least a moving path of a user equipment (200); and
transmitting a radio resource control, RRC, message including the granularity information to the user equipment,
wherein
the granularity information indicates an interval between waypoints on the moving path.

### (Feature 15)

A program that causes a computer to execute operations of:
receiving, from a base station (100), a radio resource control, RRC, message including granularity information for path information indicating at least a moving path of a user equipment (200); and
obtaining the granularity information included in the RRC message,
wherein
the granularity information indicates an interval between waypoints on the moving path.

### (Feature 16)

A program that causes a computer to execute operations of:
obtaining granularity information for path information indicating at least a moving path of a user equipment (200); and
transmitting a radio resource control, RRC, message including the granularity information to the user equipment,
wherein
the granularity information indicates an interval between waypoints on the moving path.

### (Feature 17)

A non-transitory tangible computer-readable storage medium having stored therein a program that causes a computer to execute operations of:
receiving, from a base station (100), a radio resource control, RRC, message including granularity information for path information indicating at least a moving path of a user equipment (200); and
obtaining the granularity information included in the RRC message,
wherein
the granularity information indicates an interval between waypoints on the moving path.

### (Feature 18)

A non-transitory tangible computer-readable storage medium having stored therein a program that causes a computer to execute operations of:
obtaining granularity information for path information indicating at least a moving path of a user equipment (200); and
transmitting a radio resource control, RRC, message including the granularity information to the user equipment,
wherein
the granularity information indicates an interval between waypoints on the moving path.

## Claims

1. An apparatus (200) comprising:
a communication processing unit (235) configured to receive, from a base station (100), a radio resource control, RRC, message including granularity information for path information indicating at least a moving path of the apparatus; and
an information obtaining unit (231) configured to obtain the granularity information included in the RRC message,
wherein
the granularity information indicates an interval between waypoints on the moving path.

2. The apparatus according to claim 1,
wherein the interval between waypoints on the moving path is a spatial interval between waypoints on the moving path.

3. The apparatus according to claim 1,
wherein the interval between waypoints on the moving path is a time interval between waypoints on the moving path.

4. The apparatus according to any one of claims 1 to 3,
wherein the granularity information is a predefined setting value corresponding to the interval between waypoints on the moving path.

5. The apparatus according to any one of claims 1 to 4,
wherein the granularity information indicates a range of the interval between waypoints on the moving path.

6. The apparatus according to any one of claims 1 to 5,
wherein the RRC message includes path request information that requests transmission of the path information.

7. The apparatus according to any one of claims 1 to 6,
wherein the communication processing unit is configured to transmit, to the base station, a second RRC message including moving-speed-related information regarding a moving speed of the apparatus, and
wherein the second RRC message is transmitted before a first message that is the RRC message is received.

8. The apparatus according to claim 7,
wherein the second RRC message includes information indicating availability of the path information.

9. The apparatus according to claim 7 or 8,
wherein the second RRC message is a message transmitted in an RRC connection establishment procedure.

10. The apparatus according to claim 7,
wherein the communication processing unit is configured to receive, from the base station, a third RRC message including moving speed request information that requests transmission of the moving-speed-related information, and
wherein the second RRC message is transmitted as a response to the third RRC message.

11. An apparatus (100) comprising:
an information obtaining unit (141) configured to obtain granularity information for path information indicating at least a moving path of a user equipment (200); and
a communication processing unit (145) configured to transmit a radio resource control, RRC, message including the granularity information to the user equipment,
wherein
the granularity information indicates an interval between waypoints on the moving path.

12. The apparatus according to claim 11,
wherein the communication processing unit is configured to receive, from the user equipment, a second RRC message including moving-speed-related information regarding a moving speed of the user equipment, and
the apparatus further comprises a control unit (143) configured to configure the granularity information based on the moving-speed-related information.

13. A method performed by an apparatus (200), comprising:
receiving, from a base station (100), a radio resource control, RRC, message including granularity information for path information indicating at least a moving path of the apparatus; and
obtaining the granularity information included in the RRC message,
wherein
the granularity information indicates an interval between waypoints on the moving path.

14. A method performed by an apparatus (100), comprising:
obtaining granularity information for path information indicating at least a moving path of a user equipment (200); and
transmitting a radio resource control, RRC, message including the granularity information to the user equipment,
wherein
the granularity information indicates an interval between waypoints on the moving path.
